# EUROPÄISCHE PATENTANMELDUNG

(11) **EP 4 524 889 A1**
(43) Veröffentlichungstag der Anmeldung: **19.03.2025**
(21) Anmeldenummer: 24196868.4
(22) Anmeldetag: 28.08.2024
(51) Int. Cl.: G06T 7/80, G06T 3/00

(54) **VERFAHREN UND VORRICHTUNG ZUR ERFASSUNG EINES BILDES IM AUSSENRAUM EINES KRAFTFAHRZEUGS SOWIE KRAFTFAHRZEUG**

(30) Priorität: 12.09.2023 DE 102023208846
(71) Anmelder: Continental Automotive Technologies GmbH, 30175 Hannover (DE)
(72) Erfinder: Smits, Thomas, 30175 Hannover (DE)
(74) Vertreter: Continental Corporation

(57) **Zusammenfassung**

Die Erfindung betrifft ein Verfahren (100) und eine Vorrichtung (1000) zur Erfassung eines Bildes im Außenraum eines Kraftfahrzeugs (10) sowie ein Kraftfahrzeug (10) mit einer solchen Vorrichtung (1000).

Die Erfindung sieht vor, dass das Verfahren (100) die folgenden Schritte umfasst: Erfassen eines Bildes im Außenraum eines Kraftfahrzeugs (10) mithilfe einer Kameraeinrichtung (40), wobei das erfasste Bild aufgrund der Art der Kameraeinrichtung (40) verzerrt ist, Erfassen einer Eigenschaft der Kameraeinrichtung (40), Entzerren des Bildes basierend auf der Eigenschaft der Kameraeinrichtung (40), Bereitstellen eines Überlagerungsbildes (51b, 52b, 54) auf dem Bild, das zumindest einen Teil des Bildes überlagert, Bereitstellen des entzerrten Bildes zusammen mit dem Überlagerungsbild (51b, 52b, 54) an einen Nutzer des Kraftfahrzeugs (10).

## Beschreibung

Die Erfindung betrifft ein Verfahren und eine Vorrichtung zur Erfassung eines Bildes im Außenraum eines Kraftfahrzeugs sowie ein Kraftfahrzeug mit einer solchen Vorrichtung.

Kraftfahrzeuge mit unübersichtlichen Anbauteilen, die in den Fahrweg hineinragen und die nicht oder nur schwer von einem Fahrersitz aus einsehbar sind, bedürfen einer elektronischen Überwachung mithilfe einer Kameraeinrichtung. Solch eine Überwachung ist jedoch besonders rechenintensiv, insbesondere wenn diese einen oder mehrere Sicherheitsstandards erfüllen soll oder muss.

Es ist daher eine Aufgabe der vorliegenden Erfindung, ein verbessertes Verfahren und eine verbesserte Vorrichtung zur Erfassung eines Bildes im Außenraum eines Kraftfahrzeugs anzugeben.

Diese Aufgabe wird gelöst durch den Gegenstand der unabhängigen Ansprüche. Vorteilhafte Weiterbildungen sind in den abhängigen Ansprüchen angegeben.

Gemäß einem ersten Aspekt wird ein Verfahren zur Erfassung eines Bildes im Außenraum eines Kraftfahrzeugs bereitgestellt.

Das erfindungsgemäße Verfahren umfasst dabei die Schritte Erfassen eines Bildes im Außenraum eines Kraftfahrzeugs mithilfe einer Kameraeinrichtung, wobei das erfasste Bild aufgrund der Art der Kameraeinrichtung verzerrt ist, Erfassen einer Eigenschaft der Kameraeinrichtung, Entzerren des Bildes basierend auf der Eigenschaft der Kameraeinrichtung, Bereitstellen eines Überlagerungsbildes auf dem Bild, das zumindest einen Teil des Bildes überlagert, und Bereitstellen des entzerrten Bildes zusammen mit dem Überlagerungsbild an einen Nutzer des Kraftfahrzeugs.

Das erfindungsgemäße Verfahren dient insbesondere dazu, eine einfache und kostengünstige Möglichkeit bereitzustellen, wie eine Entzerrung eines Kamerabildes auf Korrektheit und Funktionalität überprüft werden kann.

Insbesondere wird durch Ausführungsformen des erfindungsgemäßen Verfahrens ermöglicht, eine Anbauposition einer Kameraeinrichtung, insbesondere deren Ausrichtung und/oder Lage bzw. Koordinatensystem, insbesondere zum Umfeld der Kameraeinrichtung, zu erkennen bzw. zu verifizieren und dadurch eine fälschlich erfolgte Anbringung, insbesondere eine Verkippung, Verschiebung, Verdrehung und/oder Rotation der Kamera und/oder einer Halterung der Kameraeinrichtung zu ermitteln und zu korrigieren.

Bei dem Kraftfahrzeug handelt es sich insbesondere um ein Fahrzeug mit übergroßen Außendimensionen, wie beispielsweise ein Transport- und/oder Landwirtschaftsfahrzeug, das insbesondere auch Anbauteile und/oder Gerätschaften, wie einen Anhänger, eine Schaufel, eine Gabel, eine Mulde und/oder eine Mähvorrichtung, insbesondere einen Kreiselmäher, umfasst.

Dazu wird zumindest ein Bild im Außenraum des Kraftfahrzeugs mithilfe einer Kameraeinrichtung erfasst. Eine Kameraeinrichtung ist eine Vorrichtung, die ausgebildet ist, ein oder mehrere, insbesondere zusammenhängende, Bilder von dem Außenraum des Kraftfahrzeugs aufzunehmen. Insbesondere ist die Kameraeinrichtung ausgebildet, kontinuierlich und/oder periodisch Bilder vom Außenraum aufzunehmen, beispielsweise in einem Video bzw. Videostream.

Dazu kann die Kameraeinrichtung, die auch als Kamera oder Bilderfassungseinrichtung bezeichnet werden kann, insbesondere an oder in der Nähe einer Außenseite des Kraftfahrzeugs angeordnet bzw. befestigt sein. Dabei kann die Kameraeinrichtung sowohl dauerhaft bzw. ortsfest an dem Kraftfahrzeug angeordnet sein als auch lösbar bzw. entfernbar ausgebildet sein.

Beispielsweise kann die Kamera in einer oder mehreren Befestigungseinrichtungen wie Halterungen oder Aufnahmen an der Außenseite des Kraftfahrzeugs positionierbar bzw. anordnenbar sein, insbesondere an oder in der Nähe eines Anbauteils des Kraftfahrzeugs und somit anlass- bzw. bedarfsbezogen.

Bei der Kameraeinrichtung handelt es sich insbesondere um eine Kamera mit einer besonderen Linse bzw. einem besonderen Objektiv, das eine nichtproportionale Abbildung erzeugt, wie beispielsweise ein sogenanntes Weitwinkel- und/oder Fischaugenobjektiv, das einen Öffnungs- bzw. Bildwinkel von mindestens 180°, 200°, 220°, 240°, 260°, 280° oder mehr aufweisen kann. Dadurch ist das von der Kameraeinrichtung erfasste Bild verzerrt und/oder verzeichnet, insbesondere zumindest abschnittsweise gekrümmt und/oder tonnenförmig und/oder fischaugenförmig verzeichnet.

In einem weiteren Schritt wird zumindest eine Eigenschaft der Kameraeinrichtung erfasst.

Eine Eigenschaft kann auch als Kontext der Kameraeinrichtung bezeichnet werden und charakterisiert bzw. definiert eine oder mehrere Parameter der Kameraeinrichtung, wie beispielsweise Typ bzw. Art, Ort und/oder erfassbarer Bildausschnitt bzw. -winkel der Kamera bzw. des verwendeten Objektivs, wie dies im weiteren Verlauf noch beschrieben wird. Insbesondere umfasst die Eigenschaft einen Hinweis oder eine Zuordnung zu einer Art und/oder Stärke einer Verzerrung des aufgenommenen Bildes und/oder eine Ausrichtung, Verkippung, Verschiebung, Verdrehung und/oder Rotation der Kameraeinrichtung.

Das Erfassen der Eigenschaft kann dabei insbesondere durch eine Kommunikation der Kameraeinrichtung mit einer Steuereinrichtung erfolgen, welche insbesondere diesen und die im weiteren Verlauf beschriebenen Schritte des Verfahrens durchführt und auch die Erfassung eines oder mehrere Bilder durch die Kameraeinrichtung bewirken bzw. auslösen kann.

Beispielsweise kann die Kamera ihre eigenen Parameter und insbesondere des verbauten Objektivs an die Steuereinrichtung bereitstellen. Darüber hinaus können geeignete Sensoren einen Ort der Kamera erfassen, wie Nahbereichssensoren, insbesondere NFC- und/oder RFID-Sensoren, die an oder in einer Halterung verbaut sind und mit der Steuereinrichtung kommunizieren.

Alternativ oder zusätzlich kann auch durch die Kameraeinrichtung ein in oder an der Halterung oder in der Nähe dazu angeordneter Code, wie beispielsweise ein Strich- oder QR-Code, ausgelesen werden, der einen Hinweis auf den Ort der Kameraeinrichtung ermöglicht. Dabei können die Kameraeinrichtung und die Steuereinrichtung sowohl drahtgebunden als auch drahtlos miteinander kommunizieren und die Eigenschaften der Kameraeinrichtung bereitstellen.

Ebenso kann die Eigenschaft auch durch die Kameraeinrichtung bzw. die Steuereinrichtung selbst erfasst werden, beispielsweise weil das Bild bzw. der erfasste Bildausschnitt analysiert wird und so Rückschlüsse auf eine Position und/oder einen Anbauort der Kameraeinrichtung geschlossen werden.

Dabei kann der Schritt der Erfassung der Eigenschaft vor, während oder nach dem Erfassen des bzw. der Bilder erfolgen. Insbesondere erfolgt dieser Schritt initial, d. h. bevor das erste Bild durch die Kameraeinrichtung erfasst wird.

Optional kann ein Bildausschnitt aus dem erfassten Bild ausgewählt werden, der nur einen Teilbereich bzw. eine Teilmenge des erfassten Bildes umfasst, beispielsweise einen bestimmten Öffnungswinkel, insbesondere einen bestimmten horizontalen und/oder vertikalen Öffnungswinkel von dem gesamt möglichen Öffnungswinkel. Beispielsweise wird lediglich ein horizontaler Öffnungswinkel von 30° und ein vertikaler Öffnungswinkel von 20° ausgewählt. Dies kann beispielsweise durch Ausschneiden und/oder Freistellen erfolgen. Der Bildausschnitt kann dabei insbesondere auch aufgrund der Eigenschaft der Kameraeinrichtung ausgewählt werden.

Es wird das Bild bzw. der Bildausschnitt basierend auf der erfassten Eigenschaft der Kameraeinrichtung entzerrt.

Dabei wird das erfasste und aufgrund der Kameraeigenschaft verzerrte Bild entzerrt, und zwar insbesondere dergestalt, dass sich ein zuvor verzerrtes oder verzeichnetes, insbesondere stark tonnenverzerrtes und/oder fischaugenförmig verzerrtes Bild, wie es von der Kameraeinrichtung erfasst wird, auf ein unverzerrtes bzw. verzeichnungsfreies, insbesondere ein gnomonisches, rectilineares, orthografisches und/oder winkelakkurates Bild abgebildet wird. Dazu werden mithilfe von Bildbearbeitungsalgorithmen die Bildpunkte bzw. Pixel derart bearbeitet, arrangiert und angeordnet, dass ein entzerrtes Bild entsteht.

Wie genau das verzerrte Bild entzerrt wird, kann insbesondere durch Zugriff der Steuereinrichtung auf eine Datenbank erfolgen, in der ein oder mehrere Anweisungen zur Entzerrung basierend auf der jeweiligen Kameraeigenschaft hinterlegt sind. Beispielsweise sind in dieser Datenbank zu mehreren Kameratypen, Objektivtypen und/oder Anbauorten vordefinierten Entzerrungsroutinen oder -anweisungen hinterlegt, auf denen basierend dann das Bild entzerrt werden kann.

Dabei kann die Datenbank sowohl an bzw. in der Kameraeinrichtung als auch an bzw. in der Steuereinrichtung angeordnet bzw. hinterlegt sein. Alternativ oder zusätzlich kann die Datenbank auch an einer entfernen Recheneinheit hinterlegt sein, von welcher sie im Bedarfsfall drahtlos abgerufen werden kann.

Optional kann, nachdem die Eigenschaft der Kamera identifiziert wurde, diese an einen Nutzer, insbesondere einen Fahrer, des Kraftfahrzeugs bereitgestellt werden, insbesondere zur Verifikation der erfassten Eigenschaft. Dies kann beispielsweise auf einer Ausgabeeinrichtung, wie einer Anzeigeeinrichtung, beispielsweise einem Monitor oder Display, bereitgestellt werden, die insbesondere im Innenraum des Kraftfahrzeugs angeordnet ist und von einem Fahrersitz aus im Betrieb des Kraftfahrzeugs einsehbar ist. Zusammen mit der Eigenschaft der Kamera kann auch eine Eigenschaft eines Anbauteils, welches zumindest teilweise in dem erfassten Bild erscheint, bereitgestellt werden.

Es wird ein Überlagerungsbild auf dem Bild bereitgestellt, das zumindest einen Teil des Bildes überlagert.

Ein Überlagerungsbild ist dabei ein Bild, das im Wesentlichen maximal genauso groß ist und/oder im Wesentlichen maximal dieselben Dimensionen aufweist, wie das entzerrte Bild bzw. der entzerrte Bildausschnitt, und das zumindest einen Abschnitt des Bildes überdeckt und/oder bedeckt, der insbesondere vordefiniert sein kann. Dabei kann das Überlagerungsbild insbesondere abschnittsweise zumindest teilweise transparent ausgebildet sein, beispielsweise 25 %, 50 % oder 75 % transparent.

Das Überlagerungsbild kann dabei insbesondere farblich eingefärbt sein, in einer oder mehrerer von den Farben rot, blau, grün oder gelb, insbesondere einer oder mehrerer Signalfarben, beispielsweise mit einer hohen Farbsättigung und/oder einem hohen Kontrast, insbesondere in Bezug auf die in dem entzerrten Bild vorhandenen Farben.

Das Überlagerungsbild kann insbesondere geometrische Formen umfassen, wie eine oder mehrere Linienelemente und/oder Flächenelemente, wie beispielsweise Quadrate, Rechtecke, Trapeze, Dreiecke, Ellipsen, Kreise und/oder Polygone, die durch das Überlagerungsbild in dem entzerrten Bild entsprechende Bereiche, insbesondere farblich, hervorgehoben werden. Das Überlagerungsbild kann auch eine erfasste Eigenschaft der Kamera und/oder eines Anbauteils umfassen.

Insbesondere handelt es sich bei dem Überlagerungsbild um ein zu der zumindest einen Kameraeigenschaft korrespondierendes Überlagerungsbild. Beispielsweise sind in einer Datenbank zu mehreren Kameratypen, Objektivtypen und/oder Anbauorten vordefinierten Überlagerungsbilder hinterlegt, aus denen dann das entsprechend passende ausgesucht werden kann.

Bei dem Überlagerungsbild handelt es sich in dieser Ausführungsform insbesondere um ein Bild, das nicht verzerrt ist, sondern dem entzerrten Bild entspricht bzw. dazu korrespondiert.

Es wird das entzerrte Bild bzw. der entzerrte Bildausschnitt zusammen mit dem Überlagerungsbild an einen Nutzer des Kraftfahrzeugs bereitgestellt.

Es wird somit das mit dem Überlagerungsbild überlagerte, entzerrte Bild an einen Nutzer ausgegeben. Die Ausgabe kann dabei beispielsweise auf einer Ausgabeeinrichtung, wie zuvor beschrieben, bereitgestellt werden.

Durch die erfindungsgemäße Lösung wird es ermöglicht, dem Nutzer des Kraftfahrzeugs eine einfache und schnelle Möglichkeit bereitzustellen, einen Entzerrungsprozess bzw. -algorithmus zu verifizieren.

Gemäß einem alternativen Aspekt wird ein Verfahren zur Erfassung eines Bildes im Außenraum eines Kraftfahrzeugs bereitgestellt.

Das erfindungsgemäße Verfahren umfasst dabei die Schritte Erfassen eines Bildes im Außenraum eines Kraftfahrzeugs mithilfe einer Kameraeinrichtung, wobei das erfasste Bild aufgrund der Art der Kameraeinrichtung verzerrt ist, Erfassen einer Eigenschaft der Kameraeinrichtung, Bereitstellen eines basierend auf der Eigenschaft verzerrten Überlagerungsbildes auf dem Bild, das zumindest einen Teil des Bildes überlagert, Entzerren des Bildes und des Überlagerungsbildes basierend auf der Eigenschaft der Kameraeinrichtung, und Bereitstellen des entzerrten Bildes zusammen mit dem Überlagerungsbild an einen Nutzer des Kraftfahrzeugs.

Auch dieses Verfahren dient insbesondere dazu, eine einfache und kostengünstige Möglichkeit bereitzustellen, wie eine Entzerrung eines Kamerabildes auf Korrektheit und Funktionalität überprüft werden kann. Es hat somit denselben Zweck bzw. löst es dieselbe eingangs genannte Aufgabe.

Es wird auch gemäß dieser Ausführungsform zumindest ein Bild im Außenraum eines Kraftfahrzeugs mithilfe einer Kameraeinrichtung erfasst, wobei das erfasste Bild aufgrund der Art der Kameraeinrichtung verzerrt ist, und es wird zumindest eine Eigenschaft der Kameraeinrichtung erfasst, beides im Wesentlichen wie oben im Zusammenhang mit der ersten Ausführungsform beschrieben. Ebenso optional kann ein Bildausschnitt gebildet werden.

Abweichend zu der ersten Ausführungsform wird gemäß dieser Ausführungsform jedoch ein Überlagerungsbild, das zumindest einen Teil des Bildes überlagert, auf dem Bild bereitgestellt, wobei das Überlagerungsbild basierend auf der Eigenschaft vorverzerrt ist.

Dieses vorverzerrte Überlagerungsbild ist auch ein Bild, das im Wesentlichen maximal genauso groß ist und/oder im Wesentlichen maximal dieselben Dimensionen aufweist, wie das verzerrte Bild bzw. der verzerrte Bildausschnitt, und das zumindest einen Abschnitt des verzerrten Bildes überdeckt und/oder bedeckt, der insbesondere vordefiniert sein kann. Dabei kann auch dieses vorverzerrte Überlagerungsbild insbesondere abschnittsweise zumindest teilweise transparent ausgebildet sein, beispielsweise 25 %, 50 % oder 75 % transparent.

Das vorverzerrte Überlagerungsbild kann dabei auch farblich eingefärbt sein, in einer oder mehrerer von den Farben rot, blau, grün oder gelb, insbesondere einer oder mehrerer Signalfarben, beispielsweise mit einer hohen Farbsättigung und/oder einem hohen Kontrast, insbesondere in Bezug auf die in dem entzerrten Bild vorhandenen Farben.

Das vorverzerrte Überlagerungsbild kann auch geometrische Formen umfassen, wie eine oder mehrere Linienelemente, insbesondere gerade bzw. ungekrümmte, beispielsweise Diagonalen, die insbesondere einem Fixpunkt folgen oder auf diesen Zeigen, und/oder Flächenelemente, wie beispielsweise Quadrate, Rechtecke, Trapeze, Dreiecke, Ellipsen, Kreise und/oder Polygone, die durch das Überlagerungsbild in dem entzerrten Bild entsprechende Bereiche, insbesondere farblich, hervorgehoben werden.

Auch das vorverzerrte Überlagerungsbild ist ein zu der zumindest einen Kameraeigenschaft korrespondierendes Überlagerungsbild, welches beispielsweise in einer Datenbank mit für mehrere Kameratypen, Objektivtypen und/oder Anbauorten vordefinierten Überlagerungsbilder hinterlegt ist, aus denen dann das entsprechend passende ausgesucht werden kann.

Dabei wird insbesondere das verzerrte Überlagerungsbild jedoch nicht während der Ausführung des Verfahrens zuerst vorverzerrt, sondern wurde beispielsweise zuvor, insbesondere durch einen abgesicherten, zertifizierten und/oder geprüften Verzerrungsalgorithmus anhand vordefinierter Kriterien und insbesondere für verschiedene Kameraeigenschaften verzerrt und in einer Datenbank gespeichert, auf die die Steuereinrichtung Zugriff hat.

Es wird dann das Bild bzw. der Bildausschnitt und das Überlagerungsbild basierend auf der Eigenschaft der Kameraeinrichtung entzerrt.

Somit wird das verzerrte Bild von der Kameraeinrichtung mit dem darüber liegenden Überlagerungsbild gemeinsam miteinander, entzerrt, insbesondere dergestalt, dass sich das zuvor verzerrte oder verzeichnete, insbesondere stark tonnenverzerrte und/oder fischaugenförmig verzerrte Bild, wie es von der Kameraeinrichtung erfasst wird, zusammen mit dem ebenso verzerrten Überlagerungsbild auf ein unverzerrtes bzw. verzeichnungsfreies, insbesondere ein gnomonisches, rectilineares, orthografisches und/oder winkelakkurates Bild mit Überlagerungsbild abgebildet wird. Dazu werden mithilfe von Bildbearbeitungsalgorithmen die Bildpunkte bzw. Pixel derart bearbeitet, arrangiert und angeordnet, dass ein entzerrtes Bild mit Überlagerungsbild entsteht.

Es wird das entzerrte Bild bzw. der entzerrte Bildausschnitt zusammen mit dem entzerrten Überlagerungsbild an einen Nutzer des Kraftfahrzeugs bereitgestellt.

Es wird somit alternativ zu der zuerst beschriebenen Ausführungsform gemäß diesem Aspekt zunächst ein entsprechend der Kameraeigenschaft ein vorverzerrtes Überlagerungsbild auf das von der Kameraeinrichtung erfasste Bild gelegt und dann gemeinsam miteinander entzerrt.

Beide Ausführungsformen stellen eine kostengünstige und schnelle Möglichkeit bereit, wie eine Entzerrung eines Kamerabildes auf Korrektheit und Funktionalität überprüft werden kann.

Sämtliche im Folgenden beschriebenen Weiterbildungen sind sowohl auf die erste Ausführungsform als auch auf die zweite Ausführungsform anwendbar.

Gemäß einer Weiterbildung umfasst das Verfahren weiter die Schritte Erfassen einer Nutzereingabe in Erwiderung auf das entzerrte Bild und Freigeben einer Funktion des Kraftfahrzeugs in Abhängigkeit von der Nutzereingabe.

Der Nutzer, insbesondere der Fahrer, des Kraftfahrzeugs hat somit die Möglichkeit, in Erwiderung auf die Anzeige des entzerrten Bildes mit dem (entzerrten) Überlagerungsbild eine Eingabe zu tätigen. Insbesondere kann die Bereitstellung des Bildes mit dem Überlagerungsbild zusammen mit einer Eingabeaufforderung erfolgen.

Dabei kann der Nutzer insbesondere aufgefordert werden, das Überlagerungsbild mit dem entzerrten Bild bzw. Merkmale davon zu vergleichen und in Abhängigkeit des Vergleichs verifizieren oder falsifizieren, ob der Entzerrvorgang des verzerrten Bildes ordnungsgemäß abgelaufen ist.

Wenn der Nutzer das bereitgestellte Bild verifiziert, kann dann optional eine Funktion des Kraftfahrzeugs freigegeben werden. Wenn hingegen der Nutzer das bereitgestellte Bild falsifiziert, kann eine Funktion des Kraftfahrzeugs nicht freigegeben, gesperrt oder eingeschränkt werden. Insbesondere kann dies auch zusammen mit einer bereitgestellten Information über die eingeschränkte Funktion erfolgen.

Alternativ kann auch keine Eingabeaufforderung und/oder Nutzereingabe erfolgen, sondern der Nutzer kann aus freien Stücken entscheiden, ob das angezeigte entzerrte Bild korrekt ist und basierend darauf eine Funktionstauglichkeit positiv oder negativ bescheiden und/oder eine Funktion bzw. das Kraftfahrzeug in Betrieb nehmen oder nicht.

Beispielsweise kann auch in Erwiderung eine Aufforderung an den Nutzer bereitgestellt werden, in der er aufgefordert wird, die Kameraeinrichtung zu überprüfen, räumlich oder örtlich zu verändern und/oder die Steuereinrichtung oder einen Initialisierungsprozess erneut zu starten.

Bei der Funktion kann es sich insbesondere um eine Funktion des Kraftfahrzeugs handeln, die von einem Element ausgeführt wird, das zumindest teilweise im Blickfeld bzw. dem Bildausschnitt angeordnet ist, welches das Bild der Kameraeinrichtung wiedergibt.

Insbesondere handelt es sich bei der Funktion um eine Funktion in Bezug auf ein Anbauteil und/oder eine Gerätschaft, wie einen Anhänger, eine Schaufel, eine Gabel, eine Mulde und/oder eine Mähvorrichtung, weiter insbesondere eines solchen Elements, das derart an dem Kraftfahrzeug angeordnet ist, dass es von dem Fahrersitz nicht oder zumindest nicht vollständig einsehbar bzw. überblickbar ist.

Beispielsweise handelt es sich um eine Schaufel, Gabel, Mulde oder Mähvorrichtung, die weit vor das Kraftfahrzeug nach vorne herausragt und insbesondere in engeren und/oder schlecht einsehbaren Kreuzungen in die kreuzende Straße hineinragt.

Wieder beispielsweise handelt es sich um einen Anhänger, dessen hinteres Ende, insbesondere bei einer Rückwärtsfahrt, nicht so weit von dem Fahrer übersehen werden kann, dass er eine Fahrt sicher antreten oder fortsetzen kann.

Diese Funktion kann dann, sollte der Nutzer bzw. Fahrer das bereitgestellte Bild mit seiner Nutzereingabe falsifizieren, also nicht freigeben, gesperrt werden. Beispielsweise kann eine Betätigung des Anbauteils eingeschränkt oder verhindert werden oder eine Vorwärts- und/oder Rückwärtsfahrt, also ein Fahrtbeginn als solches verhindert oder nur mit eingeschränkter Geschwindigkeit, beispielsweise Schrittgeschwindigkeit, insbesondere weniger als 30 km/h, 10 km/h, 5 km/h oder 3 km/h, ermöglicht werden.

Durch diese Weiterbildung wird es ermöglicht, dass besonders rechenintensive Prozesse, die insbesondere das Entzerren des Bildes betreffen, auf einer Recheneinheit durchgeführt werden können, die nicht oder nur teilweise einen oder mehrere Sicherheitsstandards, wie beispielsweise ASIL, insbesondere ASIL-A und/oder B. Insbesondere kann durch die Freigabe des Fahrers die Sicherheit und insbesondere die Korrektheit des Entzerrungsprozesses nachträglich verifiziert und damit abgesichert werden.

Gemäß einer Weiterbildung umfasst die Kameraeigenschaft ein Modell der Kameraeinrichtung.

Ein Modell der Kameraeinrichtung umfasst insbesondere eine Eigenschaft, Art und/oder Beschaffenheit einer oder mehrerer Komponenten der Kameraeinrichtung, insbesondere des Sensors und/oder des Objektivs bzw. der Linse, wie beispielsweise ein Hersteller, Typ, Produktionsmodell und/oder - zeitraum.

Insbesondere umfasst das Modell der Kameraeinrichtung eine Brennweite und/oder einen Öffnungswinkel des Objektivs bzw. der Linse.

Das Modell der Kameraeinrichtung kann auch Daten bzw. Informationen zum Gehäuse und/oder einer Befestigungseinrichtung der Kameraeinrichtung umfassen, insbesondere Daten aus einer Simulation und/oder einer Produktion, beispielsweise sogenannte CAD-Daten, also Daten, die von einem computergestützen Entwurf stammen und die im Wesentlichen mit den tatsächlichen Werten und insbesondere Abmessungen der Kameraeinrichtung und/oder der Befestigungseinrichtung übereinstimmen.

Ebenso insbesondere umfasst das Modell eine Auflösung, ein Format, ein Seitenverhältnis und/oder ein möglicher Bildausschnitt des Sensors.

Durch diese Weiterbildung ist es möglich, die Entzerrung besonders genau durchzuführen.

Gemäß einer Weiterbildung folgt das Überlagerungsbild einer charakteristischen Kontur in dem Bild.

Eine charakteristische Kontur in dem Bild ist insbesondere eine Linie und/oder Kante einer Komponente des Kraftfahrzeugs, wie beispielsweise ein Karosserieteil, insbesondere ein Kotflügel, eine Motorhaube, eine Heckabdeckung, eine Säule, insbesondere eine A-, B- und/oder eine C-Säule und/oder ein Dach, die eine eindeutige Linienführung aufweist.

Dabei folgt zumindest eine Linie und/oder eine Fläche in dem Überlagerungsbild mindestens einer, insbesondere mehreren charakteristischen Konturen in dem Bild. Insbesondere fällt eine Linie in dem Überlagerungsbild mit einer Linie in dem Bild und/oder eine Fläche in dem Überlagerungsbild mit einer Fläche in dem Überlagerungsbild zusammen und/oder entspricht dieser. Insbesondere ist das Überlagerungsbild derart ausgebildet, dass es einer oder mehrerer solcher charakteristischen Konturen mit einer Toleranz von weniger als 5 Pixeln, 3 Pixeln, 2 Pixeln, 1 Pixel und/oder pixelgenau bzw. pixelakkurat folgt bzw. mit diesen zusammenfällt.

Durch diese Weiterbildung wird eine Überprüfung durch einen Nutzer besonders einfach ermöglicht.

Gemäß einer Weiterbildung umfasst das Überlagerungsbild einen rechteckigen Rahmen.

Ein rechteckiger Rahmen meint insbesondere eine Kontur an oder in der Nähe der Außenabmessungen des Bildes, insbesondere eine solche Kontur außerhalb derer weniger als 10 %, 5 %, 2 %, 1 % oder keine weitere Bildinformation des Bildes bzw. des Bildausschnitts vorhanden sind und/oder außerhalb derer weniger als 20 Pixel, 10 Pixel, 5 Pixel, 2 Pixel, 1 Pixel oder keine Pixel des Gesamtbildes vorhanden sind. Insbesondere handelt es sich um das bzw. die äußersten Pixel des Bildes bzw. Bildausschnitts, die durch das Überlagerungsbild überlagert werden.

Dabei ist der rechteckige Rahmen insbesondere in dem Überlagerungsbild im entzerrten bzw. unverzerrten Zustand enthalten. Mit anderen Worten ist der Rahmen in dem vorverzerrten Überlagerungsbild ebenfalls vorverzerrt und weist dann dadurch keine rechteckige Form auf, welche jedoch durch den Entzerrungsvorgang dann hergestellt wird.

Hierdurch ist es insbesondere möglich, die Art und Weise bzw. die Funktionstauglichkeit des Entzerrungsvorgangs zu überprüfen. Im Falle eines nicht völlig funktionstauglichen Entzerrungsschrittes des verzerrten Bildes zusammen mit dem vorverzerrten Überlagerungsbild inklusive vorverzerrtem Rahmen würde dieser Rahmen dann auch nicht vollständig rechteckig angezeigt werden und/oder wäre nicht als Rahmen erkenntlich.

Auch für die Anwendung eines nicht vorverzerrten Überlagerungsbildes ist die Verwendung eines Rahmens nützlich, denn hierdurch kann auch der korrekte Bildausschnitt überprüft werden.

Durch diese Weiterbildung wird eine Überprüfung durch einen Nutzer besonders einfach ermöglicht.

Gemäß einer Weiterbildung umfasst das Verfahren weiter den Schritt Ermitteln eines Histogramms des Bildes, wobei das Überlagerungsbild basierend auf dem Histogramm bereitgestellt wird.

Ein Histogramm kann auch als Helligkeits- und/oder Intensitätsprofil bezeichnet werden und ermittelt für das Bild der Kameraeinrichtung - sei es verzerrt oder bereits entzerrt - die entsprechende Werte, insbesondere Durchschnittswerte, einer Helligkeit und/oder einer Intensität der jeweiligen Pixel in dem Bild.

Das Überlagerungsbild kann dadurch farblich und/oder in Bezug auf Kontrast und/oder Intensität angepasst werde. Beispielsweise kann bei einem überwiegend dunklen Bild der Kameraeinrichtung ein überwiegend helles Überlagerungsbild verwendet werden und andersherum. Insbesondere kann hierfür Alpha-Blending genutzt werden.

Durch diese Weiterbildung wird eine Überprüfung durch einen Nutzer besonders einfach ermöglicht.

Zum Durchführen der beschriebenen Schritte kann eine Prozessorschaltung bereitgestellt sein, die eine Programmierung oder Software aufweist, die Programminstruktionen umfasst, welche die Prozessorschaltung bei Ausführen der Programminstruktionen dazu veranlasst, eine Ausführungsform des Verfahrens durchzuführen. Die Prozessorschaltung kann hierzu zumindest einen Mikroprozessor und/oder Mikrocontroller aufweisen. Die Programminstruktionen können in einem Datenspeicher der Prozessorschaltung gespeichert sein.

Gemäß einem weiteren Aspekt wird eine Vorrichtung angegeben, die ausgebildet ist, eine der zuvor beschriebenen Ausführungsformen des erfindungsgemäßen Verfahrens durchzuführen.

Die Vorrichtung kann dabei eine oder mehrere Kameraeinrichtungen umfassen und/oder Zugriff darauf haben. Die Vorrichtung kann auch eine Steuereinrichtung umfassen sowie eine Prozessorschaltung, wie bereits zuvor beschrieben.

Gemäß einem weiteren Aspekt wird ein Kraftfahrzeug mit einer solchen Vorrichtung angegeben.

Zu der Erfindung gehören auch Weiterbildungen der erfindungsgemäßen Vorrichtung und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Vorrichtung und des erfindungsgemäßen Kraftfahrzugs hier nicht noch einmal beschrieben.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
Fig. 1 eine schematische Draufsicht einer Ausführungsform einer Vorrichtung zur Erfassung eines Bildes im Außenraum eines Kraftfahrzeugs sowie ein Kraftfahrzeug;
Fig. 2 eine Detailansicht aus Fig. 1;
Fig. 3 ein Resultat einer Ausführungsform eines Verfahrens zur Erfassung eines Bildes im Außenraum eines Kraftfahrzeugs;
Fig. 4 ein Resultat einer weiteren Ausführungsform eines Verfahrens zur Erfassung eines Bildes im Außenraum eines Kraftfahrzeugs;
Fig. 5 ein Resultat einer weiteren Ausführungsform eines Verfahrens zur Erfassung eines Bildes im Außenraum eines Kraftfahrzeugs;
Fig. 6 ein schematisches Ablaufdiagramm einer Ausführungsform einer Vorrichtung und eines Verfahrens zur Erfassung eines Bildes im Außenraum eines Kraftfahrzeugs; und
Fig. 7 ein schematisches Ablaufdiagramm einer alternativen Ausführungsform einer Vorrichtung und eines Verfahrens zur Erfassung eines Bildes im Außenraum eines Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

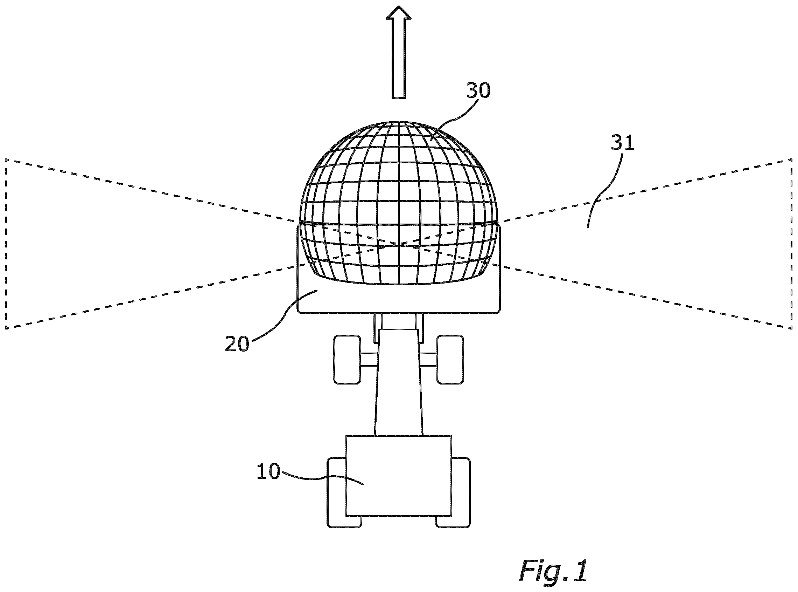

Fig. 1 zeigt eine schematische Draufsicht einer Ausführungsform einer Vorrichtung zur Erfassung eines Bildes im Außenraum eines Kraftfahrzeugs sowie ein Kraftfahrzeug 10.

Das Kraftfahrzeug 10 bewegt sich entlang einer Fahrtrichtung, die durch einen Pfeil angezeigt wird und umfasst ein Anbauteil 20 bzw. eine Anbauvorrichtung, die hier beispielhaft als Mähvorrichtung abgebildet ist. Das Anbauteil bzw. die Anbauvorrichtung ist hier beispielhaft ein Frontanbauteil bzw. eine Frontanbauvorrichtung.

Das Kraftfahrzeug 10 umfasst auch eine Kameraeinrichtung, die in dieser Fig. 1 aus Gründen der Übersichtlichkeit nicht abgebildet ist. Diese Kameraeinrichtung erfasst dabei einen Erfassungsbereich 30, der nahezu sphärisch ausgebildet ist und einen Erfassungswinkel - sowohl horizontal als auch vertikal - von 220° aufweist.

Dabei sind in dieser gezeigten Ausführungsform insbesondere die durch Bezugszeichen "31" angezeigten Ausschnitte relevant, da sie einen wichtigen Teil des Anbauteils 20 erfassen. Diese Ausschnitte sind dabei aufgrund des Erfassungsbereichs bzw. -winkels der Kameraeinrichtung noch sphärisch verzerrt.

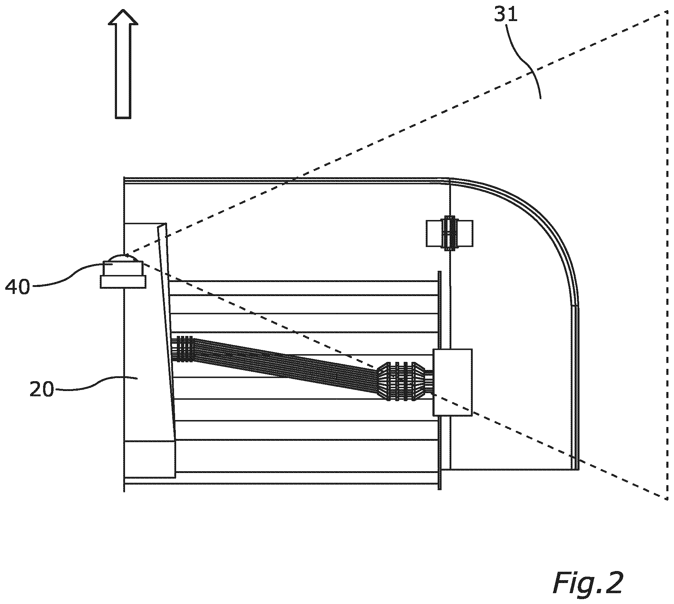

Fig. 2 zeigt eine Detailansicht aus Fig. 1.

Dabei ist in dieser Fig. 2 die Kameraeinrichtung 40 beispielhaft mit einem Fischaugenobjektiv gezeigt, die einen rechten Teil des Anbauteils in einem Ausschnitt 31 erfasst.

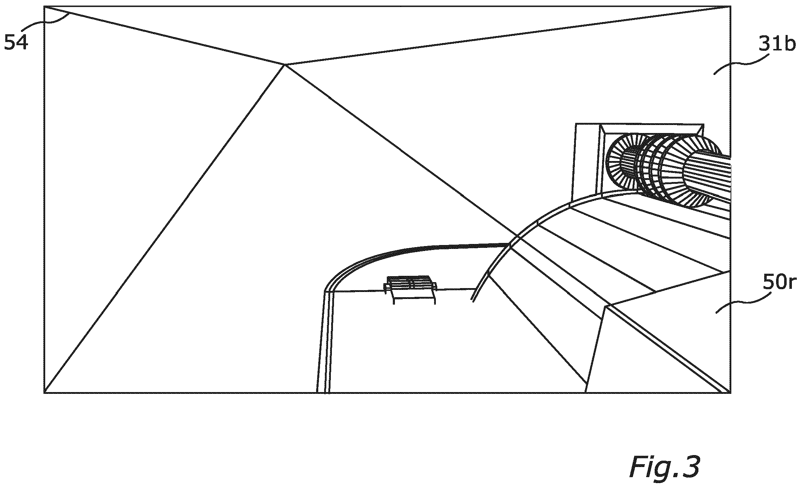

Fig. 3 zeigt ein Resultat einer Ausführungsform eines Verfahrens zur Erfassung eines Bildes im Außenraum eines Kraftfahrzeugs 10.

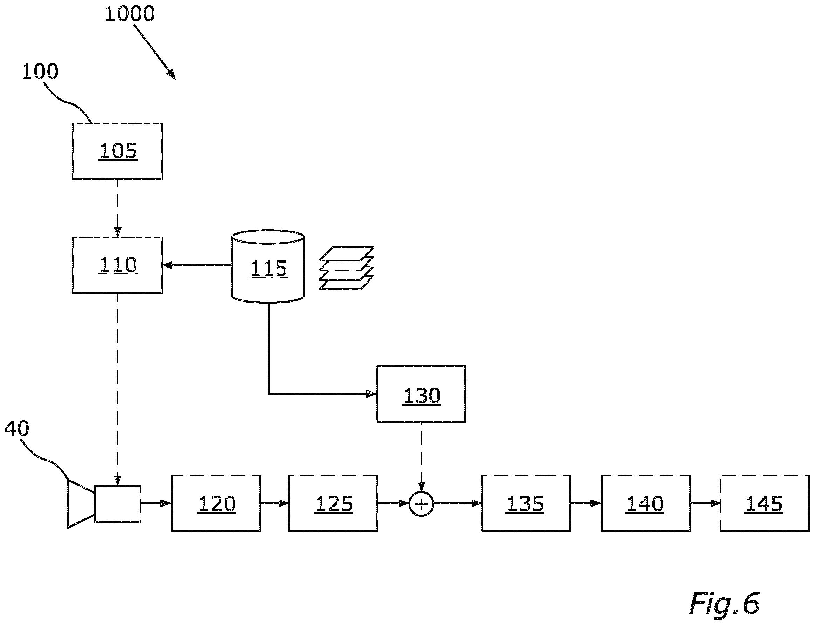

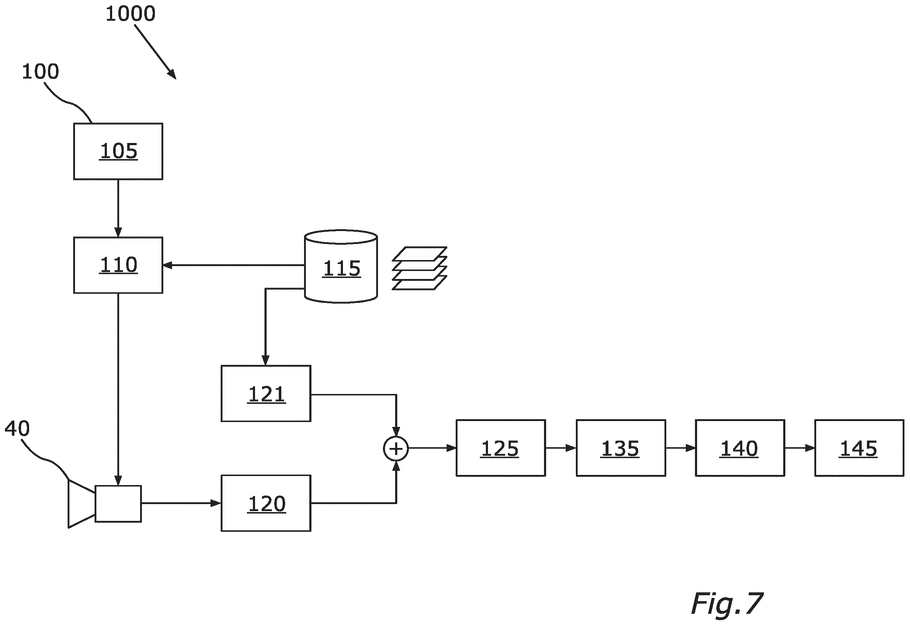

Dabei wurde der Bildausschnitt 31 aus Fig. 2 in einen entzerrten Bildausschnitt 31b entzerrt und zusammen mit einem Überlagerungsbild 54 in einem Bild mit Überlagerungsbild 50r angezeigt. Dabei kann das Überlagerungsbild 54 sowohl entzerrt mit dem entzerrten Bildausschnitt 31b überlagert werden, als auch vorverzerrt auf dem verzerrten Bildausschnitt bereitgestellt und gemeinsam damit entzerrt werden, wie dies im Zusammenhang mit den Fig. 6 und 7 noch näher erläutert werden wird.

Das Überlagerungsbild ist hier beispielhaft derart dargestellt, dass es mehrere Linien bzw. Diagonalen umfasst, die auf einen Fixpunkt gerichtet sind und einer charakteristischen Kontur des Kraftfahrzeugs folgt.

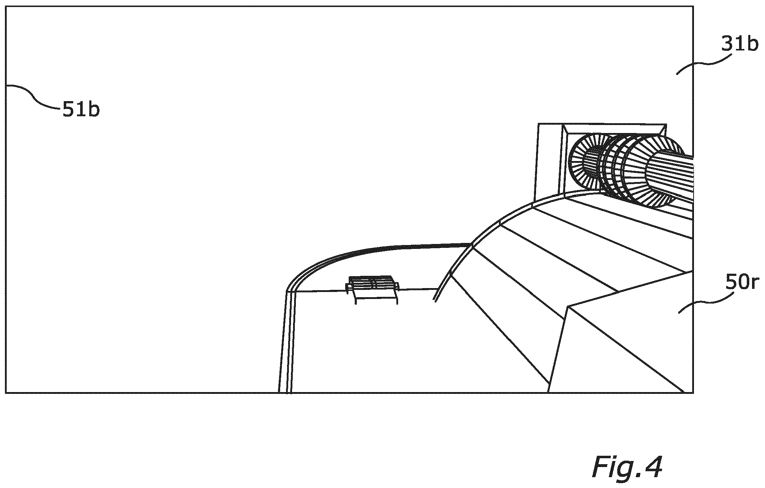

Fig. 4 zeigt ein Resultat einer weiteren Ausführungsform eines Verfahrens zur Erfassung eines Bildes im Außenraum eines Kraftfahrzeugs.

Dabei ist alternativ zu der in Fig. 3 gezeigten Ausführungsform das Überlagerungsbild 51b dergestalt abgebildet, dass es sich um einen rechteckigen Rahmen handelt.

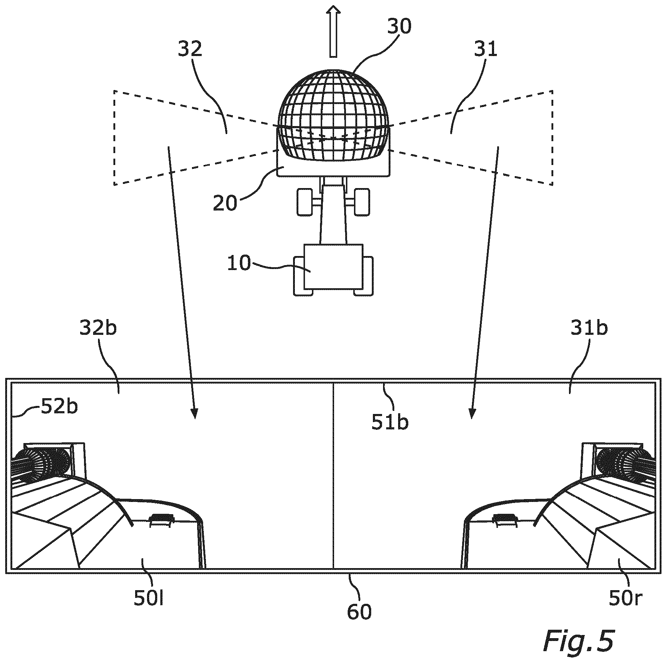

Fig. 5 zeigt ein Resultat einer weiteren Ausführungsform eines Verfahrens zur Erfassung eines Bildes im Außenraum eines Kraftfahrzeugs.

Dabei ist noch einmal abgebildet, wie der rechte Ausschnitt 31 und der linke Ausschnitt 32 in einen entzerrten Bildausschnitt 31b und 32b entzerrt sowie mit einem Überlagerungsbild 51b und 52b in Form eines rechteckigen Rahmens überlagert werden, um so nebeneinander in einem linken Bild mit Überlagerungsbild 50I und einem rechten Bild mit Überlagerungsbild 50r auf einer Anzeigeeinrichtung 60 für einen nicht abgebildeten Nutzer des Kraftfahrzeugs bereitgestellt zu werden.

Fig. 6 zeigt ein schematisches Ablaufdiagramm einer Ausführungsform einer Vorrichtung 1000 und eines Verfahrens 100 zur Erfassung eines Bildes im Außenraum eines Kraftfahrzeugs.

Die Vorrichtung 1000 führt dabei das im Folgenden beschriebene Verfahren bzw. dessen Schritte aus.

Das erfindungsgemäße Verfahren 100 beginnt mit dem Schritt 105, in dem eine oder mehrere Eigenschaften bzw. ein Kontext einer Kameraeinrichtung 40 ermittelt wird.

In einem weiteren Schritt 110 wird die Kameraeinrichtung 40 basierend auf den ermittelten Eigenschaften konfiguriert. Dies erfolgt durch Zugriff auf einen Speicher bzw. eine Datenbank 115, in der Informationen zur Kameraeinrichtung 40 hinterlegt sind.

Es wird sodann ein oder mehrere Bilder bzw. ein Video umfassend mehrere aufeinander folgende Bilder mithilfe der Kameraeinrichtung 40 von dem Außenraum des Kraftfahrzeugs im Schritt 120 erfasst. Die Bilder sind dabei aufgrund der Eigenschaft der Kameraeinrichtung verzerrt.

Es erfolgt dann eine Entzerrung des erfassten Bildes in Schritt 125 mithilfe eines geeigneten Bildentzerrungsalgorithmus basierend auf den Kameraeigenschaften.

Aus der Datenbank 115 wird basierend auf den ermittelten Eigenschaften der Kameraeinrichtung 40 ein nicht vorverzerrtes Überlagerungsbild im Schritt 130 abgerufen.

Dieses Überlagerungsbild wird mit dem erfassten Bild der Kameraeinrichtung zusammengeführt und ein gemeinsames Bild erzeugt, sodass zumindest ein Teil des erfassten und entzerrten Bildes von dem Überlagerungsbild überlagert wird.

Im Schritt 135 wird das entzerrte Bild mit dem Überlagerungsbild zusammen auf einer Anzeigeeinrichtung einem Nutzer des Kraftfahrzeugs angezeigt.

In Schritt 140 wird eine Nutzereingabe in Bezug auf das bereitgestellte Bild mit dem Überlagerungsbild erfasst und im Schritt 145 in Erwiderung auf die Nutzereingabe eine Funktion des Kraftfahrzeugs in Abhängigkeit von der Nutzereingabe freigegeben oder gesperrt.

Fig. 7 zeigt ein schematisches Ablaufdiagramm einer alternativen Ausführungsform einer Vorrichtung 1000 und eines Verfahrens 100 zur Erfassung eines Bildes im Außenraum eines Kraftfahrzeugs.

Diese Ausführungsform unterscheidet sich von der in Fig. 6 gezeigten Ausführungsform insbesondere dadurch, dass ein vorverzerrtes Überlagerungsbild auf dem verzerrten Bild bereitgestellt wird und diese beiden dann zusammen entzerrt werden, wie dies im Folgenden beschrieben werden wird.

Das erfindungsgemäße Verfahren 100 beginnt mit dem Schritt 105, in den eine oder mehrere Eigenschaften bzw. ein Kontext einer Kameraeinrichtung 40 ermittelt wird.

In einem weiteren Schritt 110 wird die Kameraeinrichtung 40 basierend auf den ermittelten Eigenschaften konfiguriert. Dies erfolgt durch Zugriff auf einen Speicher bzw. eine Datenbank 115, in der Informationen zur Kameraeinrichtung 40 hinterlegt sind.

Es wird sodann ein Bild bzw. ein Video umfassend mehrere aufeinander folgende Bilder mithilfe der Kameraeinrichtung 40 von dem Außenraum des Kraftfahrzeugs im Schritt 120 erfasst. Die Bilder sind dabei aufgrund der Eigenschaft der Kameraeinrichtung verzerrt.

Aus der Datenbank 115 wird basierend auf den ermittelten Eigenschaften der Kameraeinrichtung 40 ein vorverzerrtes Überlagerungsbild im Schritt 121 abgerufen und mit dem erfassten Bild der Kameraeinrichtung zusammengeführt, sodass zumindest ein Teil des erfassten und entzerrten Bildes von dem Überlagerungsbild überlagert wird.

Es erfolgt dann in Schritt 125 eine Entzerrung des erfassten Bildes zusammen mit dem Überlagerungsbild mithilfe eines geeigneten Bildentzerrungsalgorithmus und basierend auf den Kameraeigenschaften, um so ein entzerrtes überlagertes Bild zu erzeugen, was in Schritt 135 bereitgestellt wird.

Im Schritt 135 wird das entzerrte Bild mit dem Überlagerungsbild zusammen auf einer Anzeigeeinrichtung einem Nutzer des Kraftfahrzeugs angezeigt.

In Schritt 140 wird eine Nutzereingabe in Bezug auf das bereitgestellte Bild mit dem Überlagerungsbild erfasst und im Schritt 145 in Erwiderung auf die Nutzereingabe eine Funktion des Kraftfahrzeugs in Abhängigkeit von der Nutzereingabe freigegeben oder gesperrt.

Insgesamt zeigt das Beispiel, wie ein Verfahren zur kostengünstigen Realisierung eines funktional sicheren Betriebes einer Kameraeinrichtung an einem Kraftfahrzeug bereitgestellt werden kann.

### Bezugszeichenliste

- 10: Kraftfahrzeug
- 20: Anbauteil
- 30: Erfassungsbereich
- 31: Ausschnitt
- 31b: entzerrter Ausschnitt
- 32: Ausschnitt
- 32b: entzerrter Ausschnitt
- 40: Kameraeinrichtung
- 50I: Bild mit Überlagerungsbild
- 50r: Bild mit Überlagerungsbild
- 51b: Überlagerungsbild
- 52b: Überlagerungsbild
- 54: Überlagerungsbild
- 60: Anzeigeeinrichtung
- 100: Verfahren
- 105: Verfahrensschritt
- 110: Verfahrensschritt
- 115: Datenbank
- 120: Verfahrensschritt
- 121: Verfahrensschritt
- 125: Verfahrensschritt
- 130: Verfahrensschritt
- 135: Verfahrensschritt
- 140: Verfahrensschritt
- 145: Verfahrensschritt
- 1000: Vorrichtung

## Patentansprüche

1. Verfahren (100) zur Erfassung eines Bildes im Außenraum eines Kraftfahrzeugs (10), umfassend:
- Erfassen eines Bildes im Außenraum eines Kraftfahrzeugs (10) mithilfe einer Kameraeinrichtung (40), wobei das erfasste Bild aufgrund der Art der Kameraeinrichtung (40) verzerrt ist;
- Erfassen einer Eigenschaft der Kameraeinrichtung (40);
- Entzerren des Bildes basierend auf der Eigenschaft der Kameraeinrichtung (40);
- Bereitstellen eines Überlagerungsbildes (51b, 52b, 54) auf dem Bild, das zumindest einen Teil des Bildes überlagert;
- Bereitstellen des entzerrten Bildes zusammen mit dem Überlagerungsbild (51b, 52b, 54) an einen Nutzer des Kraftfahrzeugs (10).

2. Verfahren (100) zur Erfassung eines Bildes im Außenraum eines Kraftfahrzeugs, umfassend:
- Erfassen eines Bildes im Außenraum eines Kraftfahrzeugs mithilfe einer Kameraeinrichtung, wobei das erfasste Bild aufgrund der Art der Kameraeinrichtung verzerrt ist;
- Erfassen einer Eigenschaft der Kameraeinrichtung;
- Bereitstellen eines basierend auf der Eigenschaft verzerrten Überlagerungsbildes auf dem Bild, das zumindest einen Teil des Bildes überlagert;
- Entzerren des Bildes und des Überlagerungsbildes basierend auf der Eigenschaft der Kameraeinrichtung; und
- Bereitstellen des entzerrten Bildes zusammen mit dem entzerrten Überlagerungsbild (51b, 52b, 54) an einen Nutzer des Kraftfahrzeugs (10).

3. Verfahren (100) nach Anspruch 1 oder 2, weiter umfassend:
- Erfassen einer Nutzereingabe in Erwiderung auf das entzerrte Bild; und
- Freigeben einer Funktion des Kraftfahrzeugs in Abhängigkeit von der Nutzereingabe.

4. Verfahren (100) nach einem der vorhergehenden Ansprüche,
wobei die Kameraeigenschaft ein Modell der Kameraeinrichtung (40) umfasst.

5. Verfahren (100) nach einem der vorhergehenden Ansprüche,
wobei das Überlagerungsbild (51b, 52b, 54) einer charakteristischen Kontur (54) in dem Bild folgt.

6. Verfahren (100) nach einem der vorhergehenden Ansprüche,
wobei das Überlagerungsbild (51b, 52b, 54) einen rechteckigen Rahmen (51b, 52b) umfasst.

7. Verfahren (100) nach einem der vorhergehenden Ansprüche, weiter umfassend:
- Ermitteln eines Histogramms des Bildes;
wobei das Überlagerungsbild (51b, 52b, 54) basierend auf dem Histogramm bereitgestellt wird.

8. Vorrichtung (1000) zur Erfassung eines Bildes im Außenraum eines Kraftfahrzeugs (10), wobei die Vorrichtung (1000) ausgebildet ist, ein Verfahren (100) nach einem der vorhergehenden Ansprüche durchzuführen.

9. Kraftfahrzeug (10), umfassend eine Vorrichtung (1000) nach Anspruch 8.
